# EUROPEAN PATENT APPLICATION

(11) **EP 4 787 965 A1**
(43) Date of publication of application: **05.08.2026**
(21) Application number: 23954398.6
(22) Date of filing: 29.09.2023
(51) Int. Cl.: H04W 36/08, H04W 36/36, H04W 56/00, H04W 74/0833

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/035782
(87) International publication number: WO 2025/069432

(57) **Abstract**

A terminal according to one aspect of the present disclosure includes a receiving section that receives information indicating one or more candidate cells and information related to an execution condition for the candidate cell, and a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied to use L1L2-triggered mobility (LTM) defined by Rel. 18 when a terminal (user terminal, User Equipment (UE)) moves between cells. Applying the LTM of Rel. 18 can shorten an interruption time of a cell switch.

It is assumed that, in Rel. 19 or later versions, conditional LTM (CLTM) is supported/introduced. However, studies have not sufficiently been made on how to control the conditional LTM.

Thus, an object of the present disclosure is to provide a terminal, a radio communication method, and a base station that can appropriately perform a cell switch even when a conditional cell switch is supported.

### Solution to Problem

A terminal according to one aspect of the present disclosure includes a receiving section that receives information indicating one or more candidate cells and information related to an execution condition for the candidate cell, and a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

### Advantageous Effects of Invention

According to one aspect of the present disclosure, it is possible to appropriately perform a cell switch even when a conditional cell switch is supported.

### Brief Description of Drawings

[FIG. 1] FIG. 1A is a diagram to show an example of mobility of a UE in Rel. 17. FIG. 1B is a diagram to show an example of mobility of a UE in Rel. 18.
[FIG. 2] FIG. 2 is a diagram to show an example of a Rel-18 LTM (R18 LTM) procedure.
[FIG. 3] FIG. 3 is a diagram to show an example of a conditional LTM procedure according to a second embodiment.
[FIG. 4] FIG. 4 is a diagram to show another example of the conditional LTM procedure according to the second embodiment.
[FIG. 5] FIG. 5 is a diagram to show another example of the conditional LTM procedure according to the second embodiment.
[FIG. 6] FIG. 6 is a diagram to show an example of a conditional LTM procedure according to a fourth embodiment.
[FIG. 7] FIG. 7 is a diagram to show another example of the conditional LTM procedure according to the fourth embodiment.
[FIG. 8] FIG. 8 is a diagram to show an example of a schematic structure of a radio communication system according to one embodiment.
[FIG. 9] FIG. 9 is a diagram to show an example of a structure of a base station according to one embodiment.
[FIG. 10] FIG. 10 is a diagram to show an example of a structure of a user terminal according to one embodiment.
[FIG. 11] FIG. 11 is a diagram to show an example of a hardware structure of the base station and the user terminal according to one embodiment.
[FIG. 12] FIG. 12 is a diagram to show an example of a vehicle according to one embodiment.

### Description of Embodiments

### (Inter-Cell Mobility)

It is studied that a UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to, for example, inter-cell mobility for multi-TRP, but may be a scenario not corresponding to inter-cell mobility for multi-TRP.

(1) The UE receives, from the serving cell, a configuration of an SSB for beam measurement of a TRP corresponding to a different PCI from the serving cell and a configuration necessary for using radio resources for data transmission and reception (including resources of the different PCI).
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

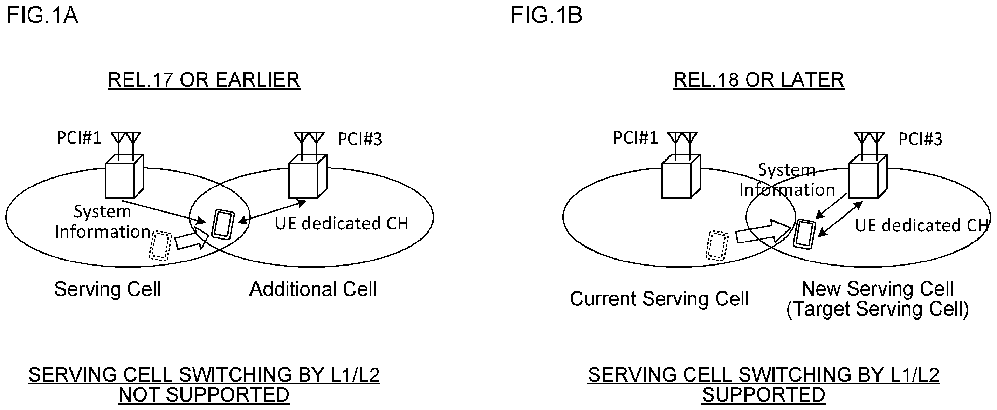

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell including an additional PCI different from the PCI of the serving cell. The UE can receive/transmit a UE-dedicated channel (UE-dedicated CH) from the additional cell. On the other hand, the UE needs to be present within coverage of the serving cell in order to receive a UE common channel (for example, system information/paging/short message). When the UE moves out of coverage of the serving cell, switching of cells (for example, processing such as RRC reconfiguration) is required through handover (also referred to as L3 mobility) or the like.

### <Scenario 2>

In scenario 2, L1/L2 inter-cell mobility (for example, L1L2-triggered mobility (LTM)) is applied. In L1/L2 inter-cell mobility, the serving cell can be changed by using a function such as beam control without performing RRC reconfiguration. In other words, transmission and reception to and from a candidate cell/additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.

(1) The UE receives, from the serving cell (Current serving cell), configuration information (for example, SSB configuration or the like) related to a cell (additional cell/candidate cell/target serving cell) having a different PCI for beam measurement/serving cell change.
(2) The UE performs beam measurement of the cell using the different PCI, and reports measurement results to the serving cell.
(3) The UE may receive a configuration (serving cell/candidate cell configuration) of the cell having the different PCI by higher layer signaling (for example, RRC). In other words, a preconfiguration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). Here, shown is a case where PCI #1 corresponding to a current serving cell is switched to PCI #3 corresponding to a candidate cell (for example, Target serving cell) by L1/L2 signaling.

The UE can receive/transmit a common channel (for example, system information/paging/short message)/UE-dedicated channel from/to a new serving cell (target serving cell #3). With this, the UE may go out of the coverage of serving cell PCI #1 before the switching.

### (L1L2-Triggered Mobility (LTM) in Rel. 18)

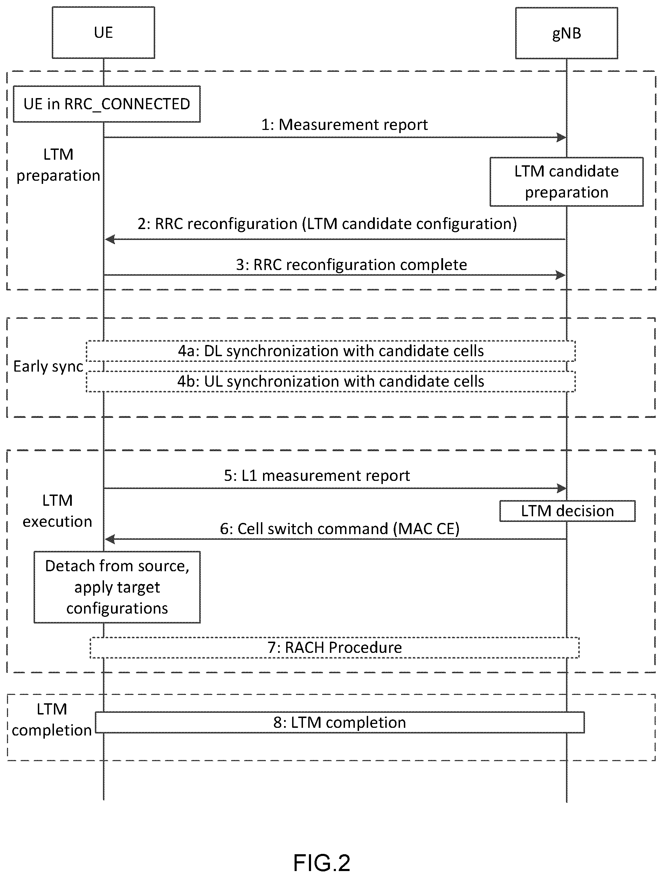

FIG. 2 is a diagram to show an example of LTM studied for Rel. 18. FIG. 2 shows, as operation for the LTM, steps of LTM preparation, early synchronization (for example, Early sync), LTM execution, and LTM completion, but steps of the LTM are not limited to this. Some of the steps (or operation(s) included in the steps) may be omitted, the order of operation(s) included in some of the steps and another operation included in another step may be changed, or another step (or another operation) may be added. Note that, in the present disclosure, the early synchronization may be interpreted as synchronization.

### <LTM Preparation>

In LTM preparation, the UE RRC connected to a serving cell (for example, UE in RRC_CONNECTED) transmits a measurement report. The measurement report may be an L3 measurement report. A base station (or source base station/serving cell) performs LTM candidate preparation, based on the measurement report transmitted from the UE.

The base station performs LTM candidate configuration by RRC (for example, RRC reconfiguration). The LTM candidate configuration may configure, to the UE, information related to candidate cells.

### <Early Synchronization (Early sync)>

The UE executes early synchronization (for example, Early sync) with the candidate cells. DL/UL early synchronization with the candidate cells may be performed by the UE after RRC configuration (for example, RRC reconfiguration) for an LTM candidate cell. The UL early synchronization may be performed after measurement (for example, L1 measurement) or measurement report (for example, L1 measurement report) transmission in an LTM execution step.

### <LTM Execution>

The UE performs measurement (for example, L1 measurement) on a configured candidate cell and transmits a measurement report. The measurement report may be an L1 measurement report. The base station (or source base station/serving cell) performs LTM decision, based on the measurement report transmitted from the UE. The base station transmits a cell switch command (for example, a MAC CE) to the UE.

The UE performs cell switching by using the cell switch command (for example, the MAC CE). For example, based on the cell switch command, the UE may detach from a source (for example, a source cell) and apply a configuration of a target cell to be a switching target (for example, target configurations).

The UE may perform a random access procedure after receiving the cell switch command. For example, the UE may, when not having a valid timing advance for the target cell/candidate cell (or a cell as the switching target), execute a random access procedure to acquire a TA value for the target cell. On the other hand, the UE may not, when having a valid timing advance (TA) for the target cell/candidate cell (or the cell as the switching target), execute the random access procedure (or may omit/skip the random access procedure).

The UE operation for acquiring TA for the target cell/candidate cell (or the cell as the switching target) may be performed before the reception of the cell switch command. As the TA acquisition for the candidate cell, at least one of a plurality of TA acquisition methods, such as TA acquisition using a RACH (for example, RACH-based solutions) and TA acquisition without using a RACH (RACH-less solutions), may be supported.

For the TA acquisition using a RACH, a method with RAR monitoring and a method without RAR monitoring may be supported. The TA acquisition methods may be interpreted as TA acquisition schemes, TA acquisition types, or TA acquisition procedures. In the present disclosure, TA acquisition, TA measurement, TA calculation, TA computation, and TA determination may be interchangeably interpreted.

For example, the UE may acquire a TA for a candidate cell by transmitting, to the candidate cell, a RACH indicated/triggered by a PDCCH (for example, a PDCCH ordered RACH). Information (for example, a TA value) related to the TA for the candidate cell may be included in a response signal (for example, RAR) of the RACH. The RAR may be transmitted from a serving cell or a candidate cell. Alternatively, a TA for a candidate cell may be acquired by using a RACH triggered by the UE or a RACH triggered from a network via a higher layer. The PDCCH order may be triggered by only a source cell (or serving cell).

Alternatively, the UE may acquire a TA for a candidate cell by transmitting, to the candidate cell, a signal other than a RACH. Information (for example, a TA value) related to the TA for the candidate cell may be indicated from the base station to the UE. As the signal other than the RACH, an SRS may be applied (SRS based TA measurement), for example.

Alternatively, the UE may measure/calculate/acquire a TA for a candidate cell, based on a DL signal (for example, a downlink reference signal) transmitted from each cell (for example, candidate cell/serving cell). The method in which the UE acquires a TA for a candidate cell, based on a DL signal transmitted from one or more cells may be referred to as UE-based TA measurement.

In the UE-based TA measurement, the downlink reference signal may be a given DL signal (for example, a synchronization signal block (for example, SSB)/CSI-RS or the like). For example, the UE may measure a difference between timings of DL signal receptions from a plurality of cells (or two cells) to obtain a TA for a candidate cell.

The plurality of cells may include a cell (for example, a serving cell) to be a reference. In this case, the UE may calculate a TA necessary for the candidate cell, based on a reception timing in a reference cell (and a TA value for the reference cell) and a timing difference between the reference cell and the candidate cell. The UE may acquire a TA for the candidate cell by using a timing advance command (TAC) transmitted from a serving cell. Note that the TA acquisition without using a RACH may also be performed before cell switch command reception. The TA acquisition may be performed in the UL synchronization (for example, early UL synchronization) step.

### <LTM Completion>

An LTM cell switch procedure may be completed by the UE transmitting a given message to the target cell/candidate cell. The given message may be an RRC reconfiguration complete message (for example, RRCReconfigurationComplete message).

In a case of RACH-based LTM, the UE may judge that, when a random access procedure is successfully completed, execution of the LTM is successfully completed.

In a case of RACH-less LTM, the UE may judge that, when the UE judges that a network has successfully received the first UL data, execution of the LTM is successfully completed. For example, in the case of the RACH-less LTM, the UE may transmit an RRC reconfiguration complete message and may transmit the first data to the target cell. The UE may judge that reception of the first UL data is successful, by receiving, in the target cell, a PDCCH for addressing a C-RNTI of the UE. The PDCCH corresponds to a PDCCH for scheduling new transmission following the first UL data.

### (Conditional Handover(CHO))

Conditional Handover (CHO) of Rel. 16 or later versions will be described. The CHO is applied, for example, to Non-Terrestrial Networks (NTNs). The NTN supports the following additional trigger conditions for the UE to perform CHO to a candidate cell.
- Radio Resource Management (RRM) measurement-based event A4
- Time-based trigger condition
- Location-based trigger condition

The time-based or location-based trigger condition is always configured together with any one of measurement-based trigger conditions (CHO events A3/A4/A5 to be described below). How the UE evaluates the time-based or location-based trigger condition together with the RRM measurement-based event depends on implementation of the UE.

### (Report Configuration (ReportConfigNR))

An RRC information element "ReportConfigNR" defines a trigger criterion for an NR measurement report event, a CHO, Conditional PSCell Addition (CPA), or Conditional PSCell Change (CPC) event, or a Layer 2 UE-to-Network (L2U2N) relay measurement report event. In the following events labeled as AN (where N = 1, 2), the measurement report event and the CHO, CPA, or CPC event are based on measurement results of a cell derived based on an SS/PBCH block or a CSI-RS. Note that serving, a neighbour, and a PCell/PSCell may be interpreted as measurement results (L1-RSRPs/L1-SINRs or the like) of a serving cell, a neighbour cell, and a PCell/PSCell.

Event A1: The serving is better than an absolute threshold.
Event A2: The serving is worse than an absolute threshold.
Event A3: The neighbour has a better offset than that for the PCell/PSCell.
Event A4: The neighbour is better than an absolute threshold.
Event A5: The PCell/PSCell is worse than an absolute threshold 1, and the neighbour/SCell is better than another absolute threshold 2.
Event A6: The neighbour cell has a larger offset than that for the SCell.

Event D1: A distance between the UE and a reference location (referenceLocation1) is greater than a configured threshold (distanceThreshFromReference1), and a distance between the UE and a reference location (referenceLocation2) is shorter than a configured threshold (distanceThreshFromReference2).
Conditional event A3: A conditional reconfiguration candidate has a better offset than that for the PCell/PSCell.
Conditional event A4: The conditional reconfiguration candidate is better than an absolute threshold.
Conditional event A5: The PCell/PSCell is worse than an absolute threshold 1, and the conditional reconfiguration candidate is better than another absolute threshold 2.
Conditional event D1: A distance between the UE and a reference location (referenceLocation1) is larger than a configured threshold (distanceThreshFromReference1), and a distance between the UE and a reference location (referenceLocation2) of the conditional reconfiguration candidate is shorter than a configured threshold (distanceThreshFromReference2).

Conditional event T1: A time measured at the UE exceeds a configured threshold "t1-Threshold," but is less than t1-Threshold+duration.
Event X1: The UE with serving L2U2N relay is worse than an absolute threshold 1, and an NR cell is better than another absolute threshold 2.
Event X2: The UE with the serving L2U2N relay is worse than an absolute threshold.
For event I1, the measurement report event is based on a Cross Link Interference (CLI) measurement result, which is derived based on SRS-RSRP or CLI-RSSI.
Event I1: Interference is higher than an absolute threshold.

### (Rel-18 LTM and Rel-16 CHO)

The LTM described above (for example, Rel-18 LTM) supports early synchronization (early sync)/early L1 measurement report, but the CHO (for example, Rel-16 CHO) does not support early synchronization/early measurement report. In the LTM, mobility decision is performed by a network (based on an L1 beam report), but in the CHO, mobility decision is performed by the UE (based on an L3 measurement result and a CHO condition).

In the LTM, a MAC CE for cell switch command is transmitted from the base station to the UE. In the CHO, the UE starts to evaluate CHO execution conditions for a candidate cell after receiving a CHO configuration by RRC signaling. After mobility (or a cell switch) is determined, the CHO requires a RACH, but the LTM does not require a RACH for some cases.

### (Analysis)

It is also assumed that radio communication systems of Rel. 19 or later versions support a conditional cell switch for LTM (also referred to as conditional LTM (CLTM)). For example, it is also considered that an LTM procedure is triggered by a UE, based on a condition configured from a network.

However, in a case where the conditional LTM is supported, how to control specific operation/procedure remains unclear. For example, in the conditional LTM, how to perform handling and application of a random access procedure (for example, whether to support RACH-base and RACH-less) or how to control evaluation of an execution condition for each candidate cell/target cell poses a problem.

Thus, the inventors of the present invention focused on introduction/support of conditional LTM, studied control of the conditional LTM, and came up with the idea of one aspect of the present embodiment.

### (Various Interpretations and so on)

Embodiments according to the present disclosure will be described in detail with reference to the drawings as follows. The radio communication methods according to the embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell for transmitting a PDSCH. A candidate cell may mean a candidate cell to be a serving cell in response to L1/L2 inter-cell mobility. L1L2-triggered mobility (LTM) and L1/L2 inter-cell mobility may be interchangeably interpreted.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. The target cell may be a cell selected from a plurality of candidate cells. In the present disclosure, switching, change, and update may be interchangeably interpreted. A serving cell may be interpreted as a serving cell before switching or a serving cell after switching.

In the present disclosure, a potential cell switch command and a request/indication of a potential cell switch command may be interchangeably interpreted. A cell switch command in the present disclosure may be transmitted from a NW to a UE via L1/L2 (DCI/MAC CE).

### (Radio Communication Method)

### <First Embodiment>

A first embodiment relates to an example of conditional LTM (CLTM).

In the present disclosure, the conditional LTM may be interpreted as LTM based on a condition, condition-based LTM, LTM triggered by a condition, LTM based on an event, event-based LTM, or LTM triggered by an event.

When the conditional LTM (CLTM) is applied/supported, a candidate cell configuration framework may be enhanced. For example, when the conditional LTM (CLTM) is applied/supported, at least one of option 1-1 to option 1-2 below may be applied.

### {Option 1-1}

The conditional LTM may be enhanced/configured based on LTM supported by an existing system (for example, Rel. 18).

New execution conditions may be provided for each candidate cell by RRC signaling. The RRC signaling may be performed based on a signaling framework for the LTM supported by Rel. 18. In the present disclosure, the execution conditions may be interpreted as performance conditions, trigger conditions, or start conditions.

Application/configuration of the conditional LTM may be notified from a network (for example, a base station) to a UE. For example, a new RRC parameter may be added to enable a conditional LTM function. Configuration of a new execution condition based on the LTM supported by Rel. 18 may be regarded as enabling of the conditional LTM function.

When the conditional LTM is supported, detailed procedures for the conditional LTM may be defined. The procedures for the conditional LTM may include a start timing at which the UE evaluates an execution condition for the conditional LTM, and the like.

### {Option 1-2}

The conditional LTM may be enhanced/configured based on conditional handover (CHO) supported by an existing system (for example, Rel. 16).

A configuration of an L1 beam/cell measurement report (for example, P/SP/AP beam reporting/UE event-triggered beam reporting) for the candidate cell may be provided by RRC signaling. The RRC signaling may be performed based on a signaling framework for the CHO supported by Rel. 16.

Application/configuration of the conditional LTM may be notified from the network (for example, the base station) to the UE. For example, a new RRC parameter may be added to enable a conditional LTM function. Configuration of a new L1 beam/cell measurement report based on the CHO supported by Rel. 16 may be regarded as enabling of the conditional LTM function.

### <Second Embodiment>

A second embodiment relates to an example of provision/signaling/evaluation of execution conditions for candidate cells in a case where conditional LTM (CLTM) is supported.

The second embodiment may be preferably applied to option 1-1 of the first embodiment. As a matter of course, a case of application of the second embodiment is not limited to this.

Execution conditions may be configured for each candidate cell by RRC signaling/MAC CE. The execution conditions (alternatively, which may be simply referred to as "conditions") may include at least one of an event, a reference signal type (RS type), a reference signal configuration (RS configuration), and a report quantity (measurement quantity). The reference signal type (RS type) may indicate an SSB/CSI-RS. The report quantity (measurement quantity) may indicate L1-RSRP/L3-RSRP/SINR/RSRQ.

The execution conditions may be configured separately for each candidate cell (for example, configuration of different conditions may be supported). Alternatively, the execution conditions may be configured commonly for a plurality of candidate cells (for example, a candidate cell group) or all candidate cells. Alternatively, some of the execution conditions may be configured commonly for candidate cells, and the remaining execution condition(s) may be configured separately for each candidate cell. The some of the execution conditions may be an event, and the remaining execution condition(s) may be a value of a condition or the like. As a matter of course, this is not restrictive.

The number of candidate cells for which the execution conditions are provided may be predefined in a specification, may be configured from a network (for example, a base station) to a UE, or may be determined based on a UE capability. For example, the number of cells for which the execution conditions are provided may be the same as configured candidate cells or may be less than the whole of the configured candidate cells.

Configuration (for example, detailed configuration) for the execution conditions may be the same as condition configuration for an existing system. The condition configuration for the existing system may be, for example, condition configuration supported for CHO supported by Rel. 16 (for example, condition configuration based on L3 measurement).

Alternatively, for the configuration for the execution conditions, new condition configuration similar to that for an event triggered L1 report may be used. Examples of the conditions (or events) will be described below.
Event A2: A measurement result of a serving cell is worse than a threshold.
Event A3: A measurement result of a neighbour cell (value obtained by adding an offset to the measurement result) is better than a measurement result of an SpCell (value obtained by adding an offset to the measurement result).
Event A4: A measurement result of the neighbour cell (value obtained by adding an offset to the measurement result) is better than a threshold.
Event A5: A measurement result of the SpCell is worse than a first threshold, and a measurement result of the neighbour cell (value obtained by adding an offset to the measurement result) is better than a second threshold.
Event A6: A measurement result of the neighbour cell (value obtained by adding an offset to the measurement result) is better than a measurement result of the serving cell (Secondary Cell (Scell)) (value obtained by adding an offset to the measurement result).
Event I1: An interference measurement result is higher than a threshold.
Event A4': A measurement result of one beam from the neighbour cell is better than a threshold.
Event A4": A statistic (for example, an average value, a total value, or the like) of measurement results of a plurality of beams (for example, the best X beams) is better than a threshold. X may be fixed or may be configurable by higher layer signaling or the like.
Event A4‴: An L1-RSRP measurement result of one beam from the neighbour cell is better than a threshold.
Event A4ʺʺ: L1-RSRPs of X respective beams from the neighbour cell are better than a threshold.

Note that applicable conditions/events are not limited to this, and the plurality of events above may be employed in combination or other events may be employed.

Regarding the condition for each candidate cell (or condition for a plurality of/all candidate cells), a condition (or event) to be configured may be determined based on at least one of option 2-1 to option 2-2 below.

### {Option 2-1}

One condition may be configured for each candidate cell (or for a plurality of/all candidate cells). The condition may correspond to only one event. In other words, one condition including only one event may be configured for each candidate cell (or for a plurality of/all candidate cells).

When a condition corresponding to each candidate cell (or an event corresponding to the condition) is satisfied, the UE/base station may perform control whether to apply perform an LTM procedure/operation for the candidate cell.

### {Option 2-2}

A plurality of (for example, X at maximum) conditions may be configured for each candidate cell (or for a plurality of/all candidate cells). X may be, for example, 2 or 3, or 4 or more. X may be defined in a specification, may be configured from the base station to the UE, or may be determined based on a UE capability.

When at least one of a plurality of conditions corresponding to each candidate cell (or events corresponding to the respective conditions) is satisfied, the UE/base station may perform control so as to perform an LTM procedure/operation for the candidate cell.

When configuration of a plurality of (for example, X) conditions is supported for each candidate cell, a restriction between the plurality of conditions may be provided. The restriction between the conditions may be, for example, an RS configuration/RS type/event/measurement quantity. As an example, the same RS configuration/RS type may be configured for the plurality of conditions, and an event/measurement quantity may be configured to differ between the conditions.

When a separate condition corresponds to each candidate cell, a restriction between the conditions may or may not be provided.

The supported conditions (for example, RS configuration/RS type/event/measurement quantity) and the number of configured conditions may follow a UE capability.

### {New MAC CE}

When the conditional LTM is supported, a given MAC CE (also referred to as a new MAC CE) may be supported/introduced. The new MAC CE may be used to update/activate, for the UE, an actual cell/candidate cell for which an execution condition is required to be evaluated. The MAC CE may be used as a trigger for condition evaluation by the UE. The MAC CE may configure a detailed execution condition in addition to indication of one or a plurality of candidate target cells for conditional LTM (for example, evaluation of execution condition(s)).

The new MAC CE indicates candidate cell(s), thereby enabling evaluation of execution conditions to be performed for only some candidate cells among candidate cells RRC configured to the UE. With this, the UE can narrow down candidate cells for which execution conditions are to be evaluated, and load of UE operation can be reduced.

The new MAC CE may be transmitted from the network (for example, the base station) to the UE after L1 beam measurement/reporting. The UE may perform evaluation of an execution condition (for example, mobility decision), based on the MAC CE. This is not restrictive, and the new MAC CE may be transmitted before L1 beam measurement/reporting.

As an example, the UE may start evaluation of an execution condition for a candidate cell indicated by the MAC CE, and may perform, when the corresponding candidate cell satisfies the execution condition, LTM (or mobility) for the candidate cell. The MAC CE can narrow down candidate cells (or candidate target cells) to be cell switch candidates, and can trigger conditional LTM executed by the UE.

After evaluating the execution condition, based on the MAC CE, the UE may transmit a RACH to a candidate cell/target cell selected/determined for mobility/cell switch.

### {Example 2-1 of Operation for Conditional LTM}

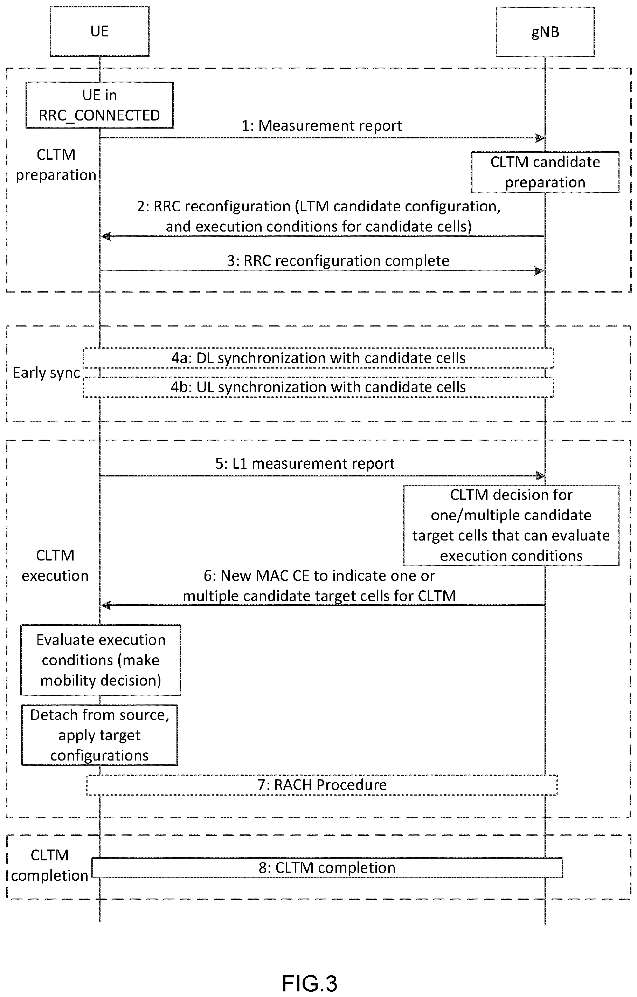

FIG. 3 is a diagram to show an example of operation for the conditional LTM using the second embodiment. FIG. 3 shows, as the operation for the conditional LTM, steps of LTM preparation, early synchronization (for example, Early sync), LTM execution, and LTM completion, but steps of the LTM are not limited to this. Some of the steps (or operation(s) included in the steps) may be omitted, the order of operation(s) included in some of the steps and another operation included in another step may be changed, or another step (or another operation) may be added.

### <<LTM Preparation>>

In LTM preparation, the UE RRC connected to a serving cell (for example, UE in RRC_CONNECTED) transmits a measurement report. The measurement report may be an L3 measurement report. A base station (or source base station/serving cell) performs LTM candidate preparation, based on the measurement report transmitted from the UE.

The base station performs, by RRC (for example, RRC reconfiguration), LTM candidate configuration and configuration of execution conditions for candidate cells. The LTM candidate configuration may configure, to the UE, information related to the candidate cells. The configuration of the execution conditions for the candidate cells may configure, to the UE, execution conditions for each candidate cell (or for a plurality of/all candidate cells).

Option 2-1/option 2-2 may be applied to the configuration of the execution conditions for the candidate cells.

### <<Early Synchronization (Early sync)>>

The UE executes early synchronization (for example, Early sync) with the candidate cells. DL/UL early synchronization with the candidate cells may be performed by the UE after RRC configuration (for example, RRC reconfiguration) for an LTM candidate cell.

### <<LTM Execution>>

The UE performs measurement (for example, L1 measurement) on a configured candidate cell and transmits a measurement report. The measurement report may be an L1 measurement report.

The base station (or source base station/serving cell) performs conditional LTM (CLTM) decision, based on the measurement report transmitted from the UE. For example, the base station determines conditional LTM for one or a plurality of candidate target cells that can evaluate execution conditions (or for which the UE is required to evaluate execution conditions). The one or plurality of candidate target cells that can evaluate execution conditions may be determined based on the measurement report transmitted from the UE.

The base station may transmit a given MAC CE to the UE. By using the given MAC CE, the base station may indicate, to the UE, information related to the one or plurality of candidate target cells for conditional LTM (or as a target of evaluation of execution conditions). The given MAC CE may trigger evaluation of the execution conditions by the UE.

The UE may start execution evaluation for the candidate target cell(s) indicated by the given MAC CE. When a target cell satisfying the execution conditions is present, the UE may execute LTM (or mobility) for the target cell. For example, when a candidate cell satisfying the execution conditions is present, the UE may detach from a source (for example, a source cell) and apply a configuration of a target cell to be a switching target (for example, target configurations).

For example, when the given MAC CE indicates a plurality of candidate cells (or candidate target cells), the UE may judge a specific target cell to be a target of mobility/cell switch, in consideration of an execution condition corresponding to each candidate cell (or an execution condition common to the plurality of candidate cells). The given MAC CE may indicate an execution condition/event corresponding to each candidate cell (or common to the plurality of candidate cells).

The UE may perform a random access procedure for the selected target cell (for example, to be the switching target) (RACH-based CLTM).

For example, the UE may, when not having a valid timing advance (TA) for the target cell/candidate cell (or a cell as the switching target), execute a random access procedure to acquire a TA value for the target cell. On the other hand, the UE may not, when having a valid timing advance for the target cell/candidate cell (or the cell as the switching target), execute the random access procedure (or may omit/skip the random access procedure). Note that the UE may, when having a valid TA for the target cell, perform the random access procedure.

After receiving the given MAC CE, the UE may judge whether a random access procedure can be applied, based on at least one of the given MAC CE and an RRC parameter (for example, an RRC parameter related to configuration of a TA acquisition method). For example, the UE may judge whether to apply a random access procedure, based on a value of a given field (for example, a timing advance command field) included in the given MAC CE. The UE may judge whether to apply a random access procedure, based on a TA acquisition method configured by the RRC parameter (or the TA acquisition method and a value of the given field in the given MAC CE).

Note that FIG. 3 shows the case where the MAC CE indicates candidate target cells for conditional LTM (or candidate target cells that evaluate execution conditions), but is not limited to this. For example, DCI may indicate, to the UE, information related to candidate target cells for conditional LTM. Alternatively, a MAC CE may indicate correspondence (or mapping) between information related to a plurality of candidate target cells for conditional LTM (or a plurality of candidate target cells for conditional LTM and execution conditions) and codepoints of a given field of DCI, and the DCI may indicate a specific candidate target cell for conditional LTM.

### <<LTM Completion>>

An LTM cell switch procedure may be completed by the UE transmitting a given message to the target cell/candidate cell.

In a case of RACH-based LTM, the UE may judge that, when a random access procedure is successfully completed, execution of the LTM is successfully completed.

In a case of RACH-less LTM, the UE may judge that, when the UE judges that a network has successfully received the first UL data, execution of the LTM is successfully completed. For example, in the case of the RACH-less LTM, the UE may transmit an RRC reconfiguration complete message and may transmit the first data to the target cell. The UE may judge that reception of the first UL data is successful, by receiving, in the target cell, a PDCCH for addressing a C-RNTI of the UE. The PDCCH corresponds to a PDCCH for scheduling new transmission following the first UL data.

### {Example 2-2 of Operation for Conditional LTM}

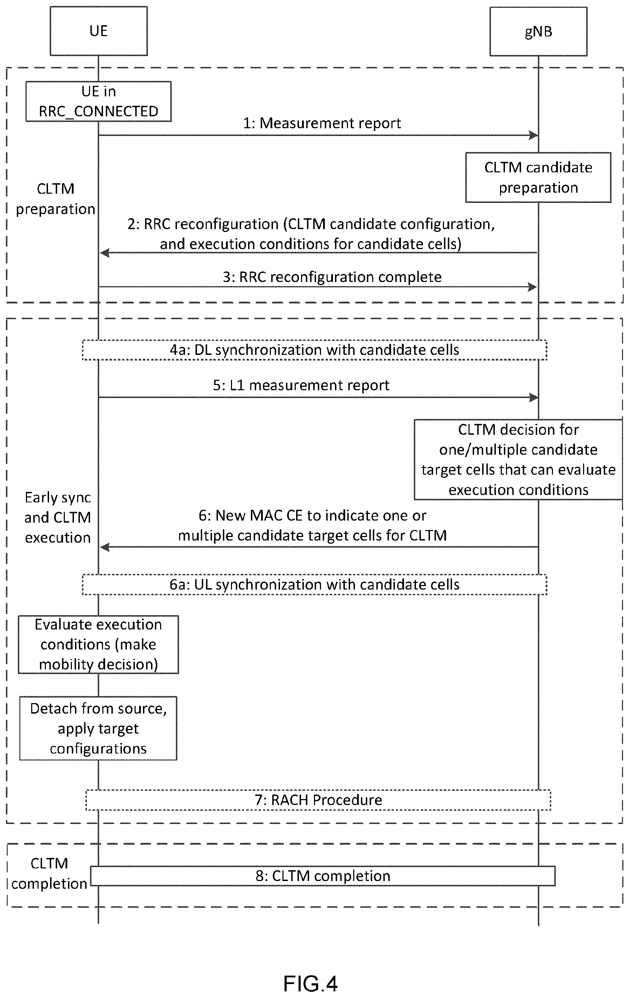

FIG. 4 is a diagram to show another example of the operation for the conditional LTM using the second embodiment. FIG. 4 shows, as the operation for the conditional LTM, steps of LTM preparation, early synchronization and LTM execution (for example, Early sync and LTM execution), and LTM completion, but steps of the LTM are not limited to this. Some of the steps (or operation(s) included in the steps) may be omitted, the order of operation(s) included in some of the steps and another operation included in another step may be changed, or another step (or another operation) may be added.

### <<LTM Preparation>>

LTM preparation can be performed similarly to that of FIG. 3.

### <<Early Synchronization (Early Sync) and LTM Execution>>

The UE performs early synchronization (for example, Early sync) with candidate cells and LTM execution.

The UE may perform DL early synchronization with candidate cells after RRC configuration (for example, RRC reconfiguration) for an LTM candidate cell. For example, the UE may perform DL synchronization with configured candidate cells.

The UE performs measurement (for example, L1 measurement) on a configured candidate cell and transmits a measurement report. The measurement report may be an L1 measurement report.

The base station (or source base station/serving cell) performs conditional LTM (CLTM) decision, based on the measurement report transmitted from the UE. For example, the base station determines conditional LTM for one or a plurality of candidate target cells that can evaluate execution conditions (or for which the UE is required to evaluate execution conditions). The one or plurality of candidate target cells that can evaluate execution conditions may be determined based on the measurement report transmitted from the UE.

The base station may transmit a given MAC CE to the UE. By using the given MAC CE, the base station may indicate, to the UE, information related to the one or plurality of candidate target cells for conditional LTM (or as a target of evaluation of execution conditions). The given MAC CE may trigger evaluation of the execution conditions by the UE.

The UE may perform DL synchronization with candidate cells after RRC configuration (for example, RRC reconfiguration) for an LTM candidate cell. In this case, the UE may perform UL synchronization for a candidate target cell for conditional LTM indicated by the given MAC CE. In this manner, the UL synchronization is performed after reception of the given MAC CE, thereby enabling the number of cells for which UL synchronization is performed to be reduced.

The UE may start execution evaluation for the candidate target cell(s) indicated by the given MAC CE. When a target cell satisfying the execution conditions is present, the UE may execute LTM (or mobility) for the target cell. For example, when the execution conditions are satisfied, the UE may detach from a source (for example, a source cell) and apply a configuration of a target cell to be a switching target (for example, target configurations). Note that the UE may perform the UL synchronization after the execution evaluation.

For example, when the given MAC CE indicates a plurality of candidate cells (or candidate target cells), the UE may judge a specific target cell to be a target of mobility/cell switch, in consideration of an execution condition corresponding to each candidate cell (or an execution condition common to the plurality of candidate cells). The given MAC CE may indicate an execution condition/event corresponding to each candidate cell (or common to the plurality of candidate cells).

The UE may perform a random access procedure for the selected target cell (for example, to be the switching target) (RACH-based CLTM).

For example, the UE may, when not having a valid timing advance (TA) for the target cell/candidate cell (or a cell as the switching target), execute a random access procedure to acquire a TA value for the target cell. On the other hand, the UE may not, when having a valid timing advance for the target cell/candidate cell (or the cell as the switching target), execute the random access procedure (or may omit/skip the random access procedure). Note that the UE may, when having a valid TA for the target cell, perform the random access procedure.

After receiving the given MAC CE, the UE may judge whether a random access procedure can be applied, based on at least one of the given MAC CE and an RRC parameter (for example, an RRC parameter related to configuration of a TA acquisition method). For example, the UE may judge whether to apply a random access procedure, based on a value of a given field (for example, a timing advance command field) included in the given MAC CE. The UE may judge whether to apply a random access procedure, based on a TA acquisition method configured by the RRC parameter (or the TA acquisition method and a value of the given field in the given MAC CE).

Note that FIG. 4 shows the case where the MAC CE indicates candidate target cells for conditional LTM (or candidate target cells that evaluate execution conditions), but is not limited to this. For example, DCI may indicate, to the UE, information related to candidate target cells for conditional LTM. Alternatively, a MAC CE may indicate correspondence (or mapping) between information related to a plurality of candidate target cells for conditional LTM (or a plurality of candidate target cells for conditional LTM and execution conditions) and codepoints of a given field of DCI, and the DCI may indicate a specific candidate target cell for conditional LTM.

### <<LTM Completion>>

LTM completion can be performed similarly to that of FIG. 3.

### {Example of Operation for Target Cell in Conditional LTM}

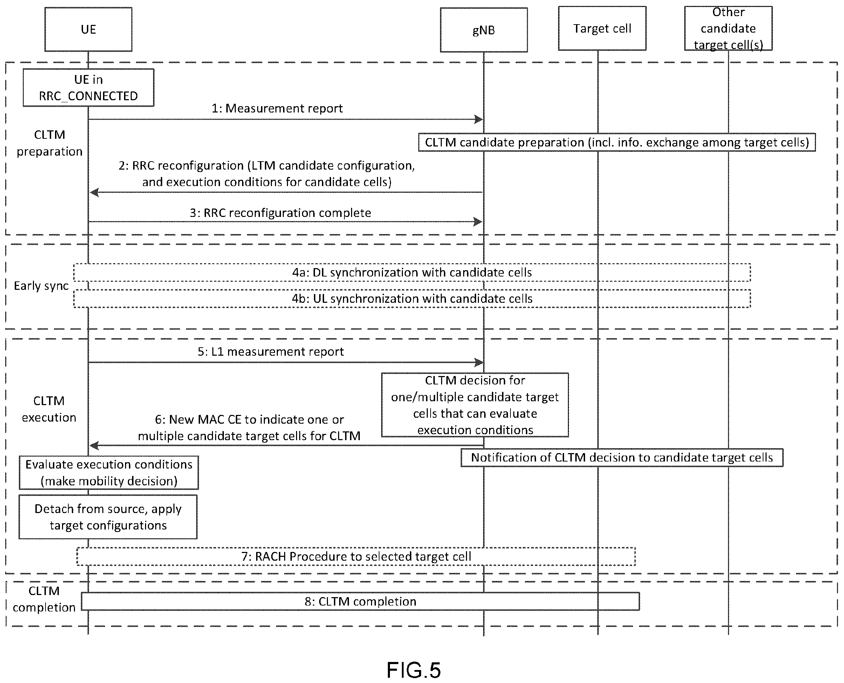

FIG. 5 is a diagram to show an example of operation for the target cell in the conditional LTM using the second embodiment. FIG. 5 shows, as the operation for the conditional LTM, steps of LTM preparation, early synchronization (for example, Early sync), LTM execution, and LTM completion (the example in FIG. 3), but steps of the LTM are not limited to this. Some of the steps (or operation(s) included in the steps) may be omitted, the order of operation(s) included in some of the steps and another operation included in another step may be changed (for example, the example in FIG. 4), or another step (or another operation) may be added.

### <<LTM Preparation>>

In LTM preparation, the UE RRC connected to a serving cell (for example, UE in RRC_CONNECTED) transmits a measurement report. The measurement report may be an L3 measurement report.

A base station (or source base station/serving cell) performs LTM candidate preparation, based on the measurement report transmitted from the UE. In this case, information may be exchanged/shared among a plurality of candidate cells (which may include the serving cell). The information exchanged/shared among the plurality of candidate cells may be at least one of information related to a measurement report reported from the UE, information related to configuration of configured candidate cells, and information related to execution conditions for candidate cells.

The base station performs, by RRC (for example, RRC reconfiguration), LTM candidate configuration and configuration of execution conditions for a candidate cell. The LTM candidate configuration may configure, to the UE, information related to the candidate cell. The configuration of the execution conditions for the candidate cells may configure, to the UE, execution conditions for each candidate cell (or for a plurality of/all candidate cells).

Option 2-1/option 2-2 may be applied to the configuration of the execution conditions for the candidate cell.

### <<Early Synchronization (Early sync)>>

The UE executes early synchronization (for example, Early Sync) with the candidate cell. DL/UL early synchronization with the candidate cell may be performed by the UE after RRC configuration (for example, RRC reconfiguration) for an LTM candidate cell. The UL early synchronization may be performed after measurement report (for example, L1 measurement report) transmission in an LTM execution step or after reception of a given MAC CE.

### <<LTM Execution>>

The UE performs measurement (for example, L1 measurement) on a configured candidate cell and transmits a measurement report. The measurement report may be an L1 measurement report.

The base station (or source base station/serving cell) performs conditional LTM (CLTM) decision, based on the measurement report transmitted from the UE. For example, the base station determines conditional LTM for one or a plurality of candidate target cells that can evaluate execution conditions (or for which the UE is required to evaluate execution conditions). The one or plurality of candidate target cells that can evaluate execution conditions may be determined based on the measurement report transmitted from the UE.

The base station may transmit a given MAC CE to the UE. By using the given MAC CE, the base station may indicate, to the UE, information related to the one or plurality of candidate target cells for conditional LTM (or as a target of evaluation of execution conditions). The given MAC CE may trigger evaluation of the execution conditions by the UE.

The base station may notify candidate cells of information related to the conditional LTM (CLTM) decision. For example, the base station may notify candidate cells of information related to the one or plurality of candidate target cells for conditional LTM (or as a target of evaluation of execution conditions). The candidate cells notified of the information may or may not be restricted to candidate cells selected as candidate cells for conditional LTM (CLTM) (for example, candidate cells not selected as the candidate cells for conditional LTM (CLTM) may also be notified of the information).

The UE may start execution evaluation for the candidate target cell(s) indicated by the given MAC CE. When a target cell satisfying the execution conditions is present, the UE may execute LTM (or mobility) for the target cell. For example, when the execution conditions are satisfied, the UE may detach from a source (for example, a source cell) and apply a configuration of a target cell to be a switching target (for example, target configurations).

The UE may perform a random access procedure for a selected target cell (for example, to be the switching target). For example, the UE may, when not having a valid timing advance for the target cell/candidate cell (or a cell as the switching target), execute a random access procedure to acquire a TA value for the target cell. On the other hand, the UE may not, when having a valid timing advance (TA) for the target cell/candidate cell (or the cell as the switching target), execute the random access procedure (or may omit/skip the random access procedure).

After receiving the given MAC CE, the UE may judge whether a random access procedure can be applied, based on at least one of the given MAC CE and an RRC parameter (for example, an RRC parameter related to configuration of a TA acquisition method). For example, the UE may judge whether to apply a random access procedure, based on a value of a given field (for example, a timing advance command field) included in the given MAC CE. The UE may judge whether to apply a random access procedure, based on a TA acquisition method configured by the RRC parameter (or the TA acquisition method and a value of the given field in the given MAC CE).

Note that, here, shown is the case where the MAC CE indicates candidate target cells for conditional LTM (or candidate target cells that evaluate execution conditions), but is not limited to this. For example, DCI may indicate, to the UE, information related to candidate target cells for conditional LTM. Alternatively, a MAC CE may indicate correspondence (or mapping) between information related to a plurality of candidate target cells for conditional LTM (or a plurality of candidate target cells for conditional LTM and execution conditions) and codepoints of a given field of DCI, and the DCI may indicate a specific candidate target cell for conditional LTM.

### <<LTM Completion>>

An LTM cell switch procedure may be completed by the UE transmitting a given message to a selected target cell/candidate cell (for example, to be the switching target).

In a case of RACH-based LTM, the UE may judge that, when a random access procedure is successfully completed, execution of the LTM is successfully completed.

### <Third Embodiment>

A third embodiment relates to an example of a given MAC CE used to indicate a target cell (or a candidate target cell) for conditional LTM (CLTM).

The given MAC CE may have a structure enhanced based on an LTM cell switch command MAC CE (LTE Cell Switch Command MAC CE) supported by Rel. 18, or may have a new structure.

For example, the given MAC CE may indicate information related to one or a plurality of target cells. In other words, the given MAC CE may support indication of information related to a plurality of target cells. The plurality of target cells may be selected from a plurality of target cells configured by RRC signaling.

For example, the given MAC CE may support indication of a plurality of sets of given fields (or a plurality of field sets), and each field set may correspond to one target cell.

The given field may be, for example, at least one (or combination(s) of all/some) of a target configuration ID field, a timing advance command field, a TCI state ID field, an uplink TCI state ID (UL TCI state ID) field, contention free random access information (CFRA info), or a reserve field. Note that information indicated by the given MAC CE (or fields included in the given MAC CE) is not limited to this, and other information may be indicated (alternatively, a field corresponding to the other information may be included in the MAC CE). The other information (or the field corresponding to the other information) may be, for example, information related to execution conditions for candidate cells (or a field related to execution conditions for candidate cells).

The target configuration ID field may indicate an index of a candidate target configuration to be applied to an LTM cell switch.

The timing advance command field may indicate whether timing advance (TA) is valid for an LTM target cell (for example, an SpCell corresponding to a target configuration indicated by the target configuration ID field). When a value of the field is set to a given value (for example, FFF), it may be indicated that valid timing is unavailable for a primary TAG of the LTM target cell. Otherwise, it may be indicated that an index value TA used to control the amount of timing adjustment required to be applied by a MAC entity is indicated and that the UE can skip a random access procedure for the LTM cell switch.

The TCI state ID field may indicate/activate a TCI state for an LTM target cell (for example, an SpCell with a target configuration indicated by the target configuration ID field). When unifiedTCI-StateType is joint in the SpCell with the target configuration indicated by the target configuration ID field, this field may be for a joint TCI state, otherwise, this field may be for a downlink TCI state.

The uplink TCI state ID (UL TCI state ID) field may indicate/activate an uplink TCI state for an LTM target cell (for example, an SpCell corresponding to a target configuration indicated by the target configuration ID field). This field may be included when unifiedTCI-StateType is separate in the SpCell with the target configuration indicated by the target configuration ID field.

The contention free random access information (CFRA info) may indicate a parameter related to random access (for example, a preamble index, a mask index, an SSB index, or the like).

For example, when a MAC CE indicates X target cells for CLTM (or as a target of evaluation of execution conditions), the MAC CE may include X sets of given fields corresponding to the respective target cells. In this case, a size (or payload) of the MAC CE may be variable in accordance with the number of indicated target cells for CLTM.

A maximum number of indicated target cells (or candidate target cells) may be predefined in a specification, may be configured to the UE by RRC signaling, or may be determined based on a UE capability. An actual number of indicated candidate target cells may be explicitly or implicitly indicated by the given MAC CE. For example, a given field (for example, a reserve field) in a first set may indicate whether a second set is present.

Content included in the given field for each set may be changed based on a given condition. For example, when RACH-based CLTM is supported, at least one of the timing advance command field and the TCI field may not be included.

A field (for example, an additional field) for indicating whether one or a plurality of specific fields are present for each set may be supported.

A UE capability for the given MAC CE may be supported/introduced. For example, the given MAC CE may be transmitted to the UE supporting conditional LTM operation.

### {When Plurality of Sets Are Indicated}

When the given MAC CE indicates a plurality of sets (for example, a plurality of candidate target cells), the UE may start execution conditions for the indicated candidate cells after receiving the given MAC CE. The UE may start/restart a given timer (for example, a monitoring timer) together with the start of the execution conditions.

A separate timer may be applied to (or associated with) each indicated candidate cell (or each plurality of sets), or a common timer may be applied to (or associated with) the indicated candidate cells (or the plurality of sets).

Before the given timer expires, the UE may perform control so as to complete evaluation of the execution conditions and at least one of a RACH procedure/first UL data transmission for a selected/determined target cell. The completion of at least one of the RACH procedure/first UL data transmission for the selected/determined target cell may mean completion of CLTM. The UE may stop the given timer when switching of a CLTM cell is successfully completed.

Otherwise (for example, when the given timer expires before the UE completes at least one of the evaluation of the execution conditions and at least one of the RACH procedure/first UL data transmission for the selected/determined target cell), it may be judged that the CLTM has failed. The UE may, when judging that the CLTM has failed, perform control so as to perform given operation.

The given operation may be retransmission of a PRACH/UL data. The given operation may be the same as operation after LTM failure. For example, the given operation may be cell selection by the UE (a), may be RACH-based LTM cell switch (b) when the selected cell is an LTM candidate cell, and may be RRC reconfiguration request transmission (c) when the selected cell is not an LTM candidate cell.

The given timer (for example, a length or the like) may be defined in a specification, may be configured to the UE by RRS signaling, may be determined based on a UE capability, or may be determined in accordance with another condition. Such another condition may be, for example, at least one of a scenario (intra/inter-DU/CU) and a frequency (intra/inter-F).

### {When One Set Is Indicated}

When the given MAC CE indicates one set (for example, a single candidate target cell), the UE may apply at least one of option 3-1 and option 3-2 below.

### <<Option 3-1>>

When receiving the given MAC CE indicating one set, the UE may perform control so as to perform a cell switch to a candidate cell corresponding to the one set. For example, when the given MAC CE indicates only one target cell as a target cell for CLTM, the UE may perform control so as to perform an LTM cell switch similar to that of Rel. 18.

### <<Option 3-2>>

When receiving the given MAC CE indicating one set, the UE may determine CLTM (for example, CLTM timing or the like), based on evaluation of an execution condition for a candidate cell corresponding to the one set. The UE may handle the indication by the given MAC CE as an early candidate mobility command for CLTM. For example, when the execution condition is satisfied before expiration of a given timer, the UE may perform RACH/first UL data transmission (or cell switch operation) to the indicated target cell after the execution condition is satisfied.

A UE capability corresponding to option 3-1/option 3-2 may be introduced/supported.

### <Fourth Embodiment>

A fourth embodiment relates to another example of the conditional LTM (CLTM).

When the conditional LTM (CLTM) is applied/supported, a UE may apply at least one of option 4-1 and option 4-2 below.

### {Option 4-1}

When the conditional LTM supports RACH-based CLTM as a baseline, the UE may transmit a RACH to a target cell after determining mobility (or selecting the target cell).

A given MAC CE indicating a candidate target cell for CLTM may indicate information related to a TCI state (alternatively, the given MAC CE may include a TCI state field). As the given MAC CE, the MAC CE described in the third embodiment may be used. In this case, the UE may select an SSB/CSI-RS for PRACH transmission by using a TCI state indicated by the given MAC CE, and may use the TCI state as QCL for subsequent data transmission to a target.

The given MAC CE may not indicate the information related to a TCI state (alternatively, the given MAC CE may not include the TCI state field). In this case, the UE may identify a TCI state for the subsequent data transmission, based on a random access procedure.

The UE may judge that, when the random access procedure (RACH) is successfully completed, an LTM execution procedure is successfully completed.

The steps shown in at least one of FIG. 3 to FIG. 5 may be applied to operation for the CLTM in option 4-1.

### {Option 4-2}

The conditional LTM may support both RACH-less CLTM and RACH-based CLTM.

The UE may judge whether a random access procedure can be applied (selection of RACH-based/RACH-less CLTM), based on at least one of a MAC CE and an RRC parameter (for example, an RRC parameter related to configuration of a TA acquisition method). For example, the UE may judge whether to apply a random access procedure, based on a value of a given field (for example, a timing advance command field) included in the given MAC CE. The UE may judge whether to apply a random access procedure, based on a TA acquisition method configured by the RRC parameter (or the TA acquisition method and a value of the given field in the given MAC CE).

When the RACH-based CLTM is configured/applied, the steps shown in at least one of FIG. 3 to FIG. 5 may be applied.

When the RACH-less CLTM is configured/applied, the UE may apply at least one of option 4-2-1 to option 4-2-3 below.

### <<Option 4-2-1>>

After evaluating execution conditions and determining mobility or cell switch (or selecting a new target cell), the UE may transmit, to the new target cell, a given message for indicating arrival of the UE (for example, UE arrival). The given message may be, for example, a message indicating RRC reconfiguration completion (for example, RRCReconfigurationComplete). The given message may be transmitted as content of the first UL MAC PDU/transmission.

The UE may judge that when judging that a network (for example, a base station) has successfully received the first UL data (for example, when receiving, in the target cell, a PDCCH for addressing a C-RNTI of the UE), a CLTM execution procedure is successfully completed. The PDCCH corresponds to a PDCCH for scheduling new transmission following the first UL data.

At least one of a dynamic grant based PUSCH (DG PUSCH) and a configured grant based PUSCH (CG PUSCH) may be applied to the first UL data transmission to the target cell.

When option 4-2-1 is applied, a TCI state field may be present in a MAC CE indicating a candidate target cell for CLTM (for example, the given MAC CE described in the third embodiment). In this case, the UE may transmit, to the new target cell, the first MAC CE/MAC PDU by using an indicated TCI state for UL.

### <<Option 4-2-2>>

After evaluating execution conditions and determining mobility or cell switch (or selecting a new target cell), the UE may transmit, to the network, a MAC CE to indicate, to the new target cell, at least one of mobility decision and a result of reporting of the latest L1 beam measurement/event-triggered L1 beam measurement/L1 beam measurement.

The UE may judge that when judging that a network (for example, a base station) has successfully received the first UL data (for example, when receiving, in the target cell, a PDCCH for addressing a C-RNTI of the UE), a CLTM execution procedure is successfully completed. The PDCCH corresponds to a PDCCH for scheduling new transmission following the first UL data.

At least one of a dynamic grant based PUSCH (DG PUSCH) and a configured grant based PUSCH (CG PUSCH) may be applied to the first UL data transmission to the target cell.

When option 4-2-2 is applied, a TCI state field may be present in a MAC CE indicating a candidate target cell for CLTM (for example, the given MAC CE described in the third embodiment). In this case, the UE may transmit, to the new target cell, the first MAC CE/MAC PDU by using an indicated TCI state for UL.

### <<Option 4-2-3>>

After evaluating execution conditions and determining mobility or cell switch (or selecting a new target cell), the UE may transmit, to the network, a MAC CE to indicate, to a current serving cell (for example, a serving cell before cell switching), at least one of the selected target cell and a result of reporting of the latest L1 beam measurement/event-triggered L1 beam measurement/L1 beam measurement.

After transmitting the MAC CE to the current serving cell, the UE may start a given timer (or a new timer) to start monitoring of a PDCCH transmitted from the selected/indicated target cell. When, before expiration of the given timer, the UE detects, from the target cell, a DCI format (for example, DCI format 1_0/0_0 or the like) to which a C-RNTI is applied, it may be indicated that the CLTM has succeeded. Otherwise, it may be indicated that the CLTM has failed.

The UE may assume that TCI for the PDCCH monitoring is QCL with a given L1 beam (for example, SSB/CSI-RS) of the selected target cell. The given L1 beam may be the strongest L1 beam (for example, SSB/CSI-RS) reported by the UE.

### {Example 4-1 of Operation for Conditional LTM}

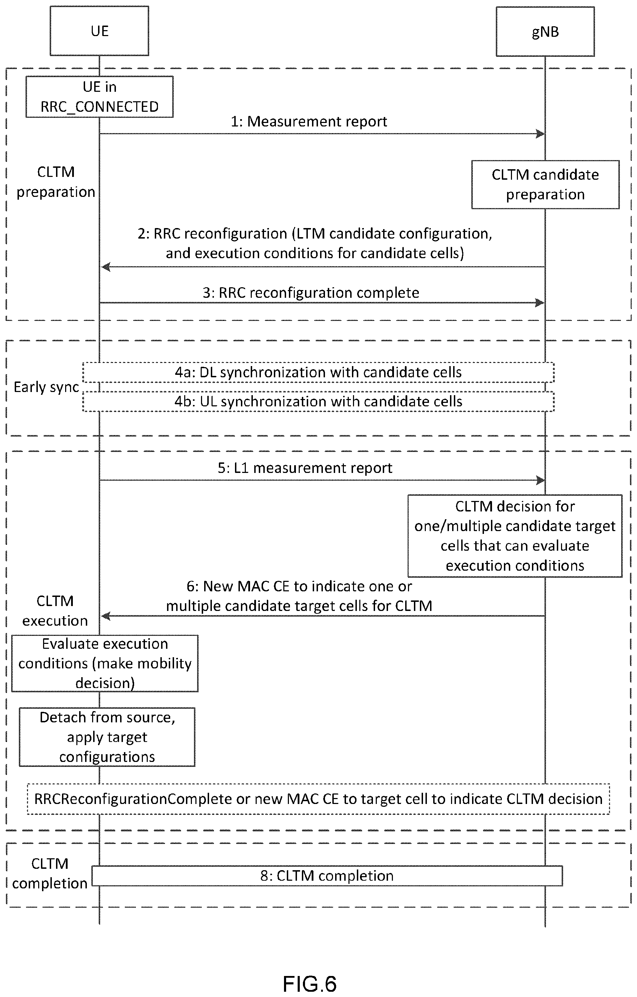

FIG. 6 is a diagram to show an example of operation for the conditional LTM using the fourth embodiment. FIG. 6 shows, as the operation for the conditional LTM, steps of LTM preparation, early synchronization (for example, Early Sync), LTM execution, and LTM completion, but steps of the LTM are not limited to this. Some of the steps (or operation(s) included in the steps) may be omitted, the order of operation(s) included in some of the steps and another operation included in another step may be changed, or another step (or another operation) may be added. FIG. 6 may be preferably applied to RACH-less CLTM (particularly to option 4-2-1/option 4-2-2).

### <<LTM Preparation>>

In LTM preparation, the UE RRC connected to a serving cell (for example, UE in RRC_CONNECTED) transmits a measurement report. The measurement report may be an L3 measurement report. A base station (or source base station/serving cell) performs LTM candidate preparation, based on the measurement report transmitted from the UE.

The base station performs, by RRC (for example, RRC reconfiguration), LTM candidate configuration and configuration of execution conditions for a candidate cell. The LTM candidate configuration may configure, to the UE, information related to the candidate cell. The configuration of the execution conditions for the candidate cells may configure, to the UE, execution conditions for each candidate cell (or for a plurality of/all candidate cells).

Option 2-1/option 2-2 may be applied to the configuration of the execution conditions for the candidate cell.

### <<Early Synchronization (Early sync)>>

The UE executes early synchronization (for example, Early Sync) with the candidate cell. DL/UL early synchronization with the candidate cell may be performed by the UE after RRC configuration (for example, RRC reconfiguration) for an LTM candidate cell. The UL early synchronization may be performed after measurement report (for example, L1 measurement report) transmission in an LTM execution step or after reception of a given MAC CE.

### <<LTM Execution>>

The UE performs measurement (for example, L1 measurement) on a configured candidate cell and transmits a measurement report. The measurement report may be an L1 measurement report.

The base station (or source base station/serving cell) performs conditional LTM (CLTM) decision, based on the measurement report transmitted from the UE. For example, the base station determines conditional LTM for one or a plurality of candidate target cells that can evaluate execution conditions (or for which the UE is required to evaluate execution conditions). The one or plurality of candidate target cells that can evaluate execution conditions may be determined based on the measurement report transmitted from the UE.

The base station may transmit a given MAC CE to the UE. By using the given MAC CE, the base station may indicate, to the UE, information related to the one or plurality of candidate target cells for conditional LTM (or as a target of evaluation of execution conditions). The given MAC CE may trigger evaluation of the execution conditions by the UE.

The UE may start execution evaluation for the candidate target cell(s) indicated by the given MAC CE. When a target cell satisfying the execution conditions is present, the UE may execute LTM (or mobility) for the target cell. For example, when the execution conditions are satisfied, the UE may detach from a source (for example, a source cell) and apply a configuration of a target cell to be a switching target (for example, target configurations).

After determining mobility or cell switch (or selecting a new target cell), based on evaluation of the execution conditions, the UE may transmit, to the new target cell, at least one of a message related to RRC reconfiguration completion (for example, RRCReconfigurationComplete) and a MAC CE (for example, a new MAC CE). The MAC CE may indicate CLTM decision by the UE to the new target cell.

### <<LTM Completion>>

An LTM cell switch procedure may be completed by the UE transmitting a given message/MAC CE to the target cell/candidate cell.

In a case of RACH-less LTM, the UE may judge that, when the UE judges that a network has successfully received the first UL data, execution of the LTM is successfully completed. For example, in the case of the RACH-less LTM, the UE may transmit an RRC reconfiguration complete message/MAC CE and may transmit the first data to the target cell. The UE may judge that reception of the first UL data is successful, by receiving, in the target cell, a PDCCH for addressing a C-RNTI of the UE. The PDCCH corresponds to a PDCCH for scheduling new transmission following the first UL data.

### {Example 4-2 of Operation for Conditional LTM}

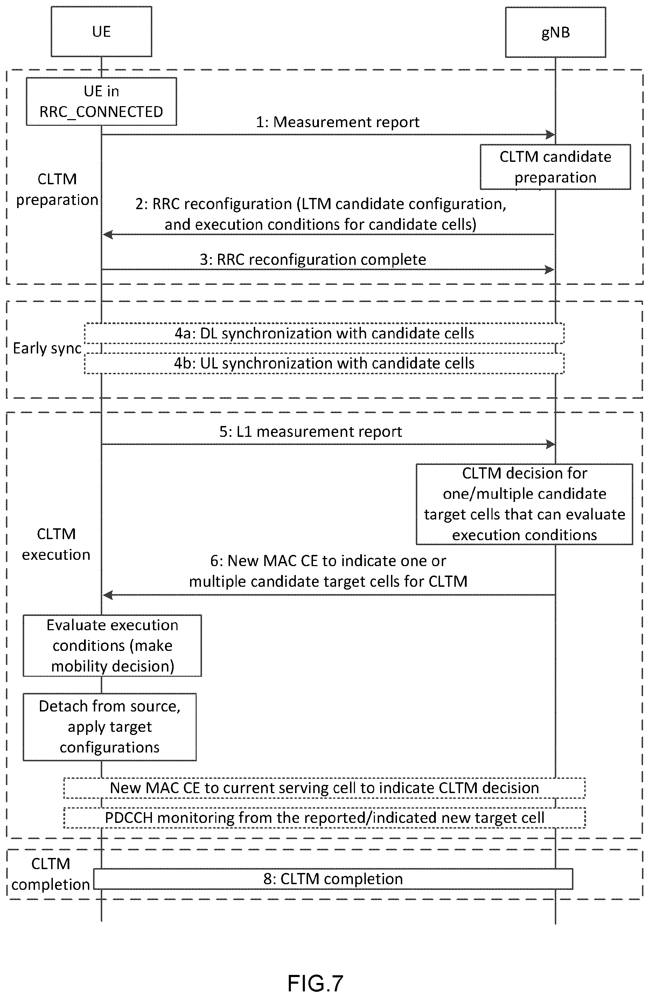

FIG. 7 is a diagram to show another example of the operation for the conditional LTM using the fourth embodiment. FIG. 7 shows, as the operation for the conditional LTM, steps of LTM preparation, early synchronization (for example, Early Sync), LTM execution, and LTM completion, but steps of the LTM are not limited to this. Some of the steps (or operation(s) included in the steps) may be omitted, the order of operation(s) included in some of the steps and another operation included in another step may be changed, or another step (or another operation) may be added. FIG. 7 may be preferably applied to RACH-less CLTM (particularly to option 4-2-3).

### <<LTM Preparation>>

LTM preparation can be performed similarly to that of FIG. 6.

### <<Early Synchronization (Early sync)>>

Early synchronization can be performed similarly to that of FIG. 6.

### <<LTM Execution>>

The UE performs measurement (for example, L1 measurement) on a configured candidate cell and transmits a measurement report. The measurement report may be an L1 measurement report.

The base station (or source base station/serving cell) performs conditional LTM (CLTM) decision, based on the measurement report transmitted from the UE. For example, the base station determines conditional LTM for one or a plurality of candidate target cells that can evaluate execution conditions (or for which the UE is required to evaluate execution conditions). The one or plurality of candidate target cells that can evaluate execution conditions may be determined based on the measurement report transmitted from the UE.

The base station may transmit a given MAC CE to the UE. By using the given MAC CE, the base station may indicate, to the UE, information related to the one or plurality of candidate target cells for conditional LTM (or as a target of evaluation of execution conditions). The given MAC CE may trigger evaluation of the execution conditions by the UE.

The UE may start execution evaluation for the candidate target cell(s) indicated by the given MAC CE. When a target cell satisfying the execution conditions is present, the UE may execute LTM (or mobility) for the target cell. For example, when the execution conditions are satisfied, the UE may detach from a source (for example, a source cell) and apply a configuration of a target cell to be a switching target (for example, target configurations).

After determining mobility or cell switch (or selecting a new target cell), based on evaluation of the execution conditions, the UE may transmit a given MAC CE to a current serving cell (for example, a serving cell before cell switching). The MAC CE may indicate CLTM decision by the UE to the current serving cell. The given MAC CE may include at least one of information related to the selected target cell and information related to a result of reporting of the latest L1 beam measurement/event-triggered L1 beam measurement/L1 beam measurement.

After transmitting the given MAC CE to the current serving cell, the UE may start a given timer (or a new timer) to start monitoring of a PDCCH transmitted from the reported/indicated new target cell. For example, the UE may perform control so as to start a given timer after transmitting the given MAC CE to monitor the PDCCH until the given timer expires.

### <<LTM Completion>>

When, before expiration of the given timer, detecting, from the target cell, a DCI format (for example, DCI format 1_0/0_0 or the like) to which a C-RNTI is applied, the UE may judge that the CLTM has succeeded (or the CLTM has been completed). Otherwise, the UE may judge that the CLTM has failed.

In option 4-2-1 to option 4-2-3, after success (or after completion) of the CLTM procedure, the UE may perform control so as to reset a given transmission power control parameter (for example, TPC parameters) for the new target cell. The transmission power control parameter may include, for example, a TPC cumulative parameter for UL transmission (for example, a PUSCH/PUCCH/SRS).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the embodiments above
- supporting of application of conditional LTM
- supporting of configuration of an execution condition for each candidate cell
- supporting of a RACH-less procedure in conditional LTM

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of a cell switch with a potential cell switch command, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1-1}

A terminal including:
a receiving section that receives information indicating one or more candidate cells and information related to an execution condition for the candidate cell; and
a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

### {Supplementary Note 1-2}

The terminal according to supplementary note 1-1, wherein configuration of a separate execution condition is supported for the each candidate cell.

### {Supplementary Note 1-3}

The terminal according to supplementary note 1-1 or 1-2, wherein the control section performs control to perform synchronization with the one or more candidate cells before receiving the control information.

### {Supplementary Note 1-4}

The terminal according to any one of supplementary notes 1-1 to 1-3, wherein after judging the specific candidate cell, the control section judges, based on presence or absence of valid timing advance corresponding to the specific candidate cell, whether to apply a random access procedure.

### {Supplementary Note 2-1}

A terminal including:
a receiving section that receives information indicating one or more candidate cells and information related to an execution condition for the candidate cell; and
a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed, wherein
the control information is a MAC CE (Medium Access Control Control Element) that supports configuration of a plurality of field sets corresponding to a plurality of respective candidate cells.

### {Supplementary Note 2-2}

The terminal according to supplementary note 2-1, wherein a number of the candidate cells to be the target of the evaluation indicated by the MAC CE or a number of the field sets is determined based on higher layer signaling and a capability of the terminal.

### {Supplementary Note 2-3}

The terminal according to supplementary note 2-1 or 2-2, wherein when the MAC CE indicates a plurality of candidate cells or a plurality of field sets, the control section starts a given timer after receiving the MAC CE to evaluate an execution condition for the candidate cell to be the target of the evaluation.

### {Supplementary Note 2-4}

The terminal according to any one of supplementary notes 2-1 to 2-3, wherein when the MAC CE indicates one candidate cell or one field set, the control section judges, without evaluating an execution condition for the one candidate cell, that the one candidate cell is a specific candidate cell for which mobility or cell switch is performed.

### {Supplementary Note 3-1}

A terminal including:
a receiving section that receives information indicating one or more candidate cells and information related to an execution condition for the candidate cell;
a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed; and
a transmitting section that, after the specific candidate cell is judged, performs UL transmission to at least one of the specific candidate cell and a serving cell, the UL transmission being based or not based on a random access procedure.

### {Supplementary Note 3-2}

The terminal according to supplementary note 3-1, wherein after the specific candidate cell is judged, the transmitting section transmits an RRC reconfiguration complete message to the specific cell.

### {Supplementary Note 3-3}

The terminal according to supplementary note 3-1 or 3-2, wherein after the specific candidate cell is judged, the transmitting section transmits, to the specific cell, a MAC CE indicating that the mobility or the cell switch is determined.

### {Supplementary Note 3-4}

The terminal according to any one of supplementary notes 3-1 to 3-3, wherein after the specific candidate cell is judged, the transmitting section transmits, to the serving cell, a MAC CE including information related to the specific cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

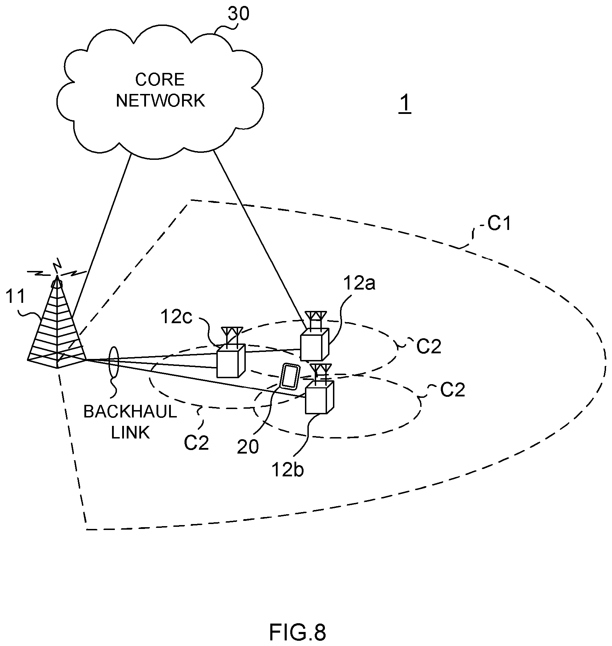

FIG. 8 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

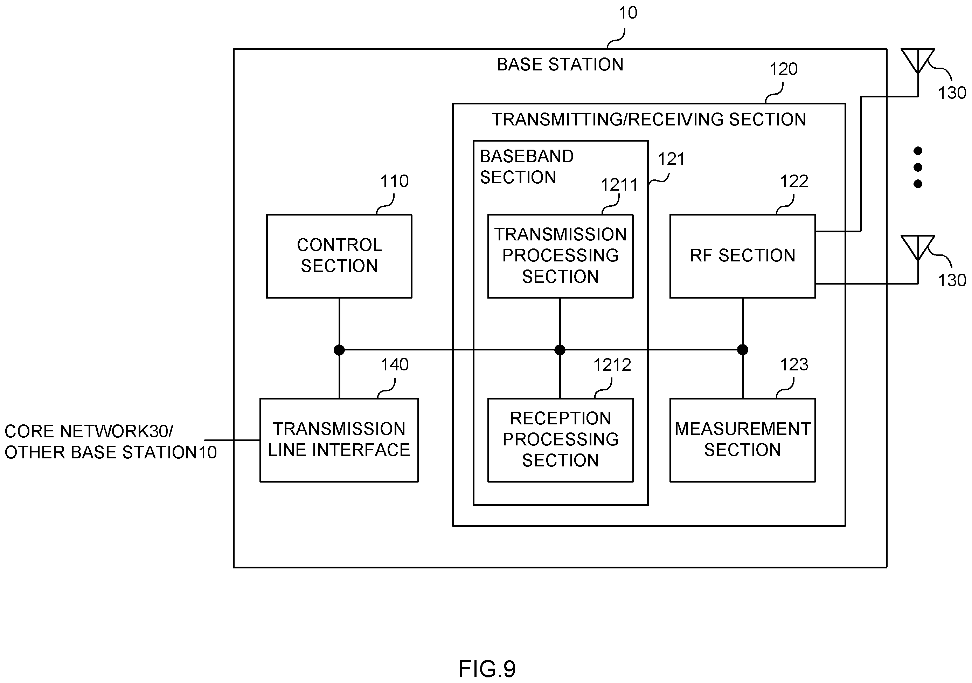

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, to a terminal, information indicating one or more candidate cells and information related to an execution condition for the candidate cell. The control section 110 may judge, based on a measurement report transmitted from the terminal, a candidate cell to be a target of evaluation of an execution condition, and may indicate information related to the candidate cell to be the target of the evaluation.

The control section 110 may perform control to judge, based on a measurement report transmitted from the terminal, a candidate cell to be a target of evaluation of an execution condition and to transmit control information indicating information related to the candidate cell to be the target of the evaluation.

The control section 110 may perform control to judge, based on a measurement report transmitted from the terminal, a candidate cell to be a target of evaluation of an execution condition and to transmit control information indicating information related to the candidate cell to be the target of the evaluation. The transmitting/receiving section 120 may receive information related to a specific candidate cell selected by the terminal, based on the control information.

### (User Terminal)

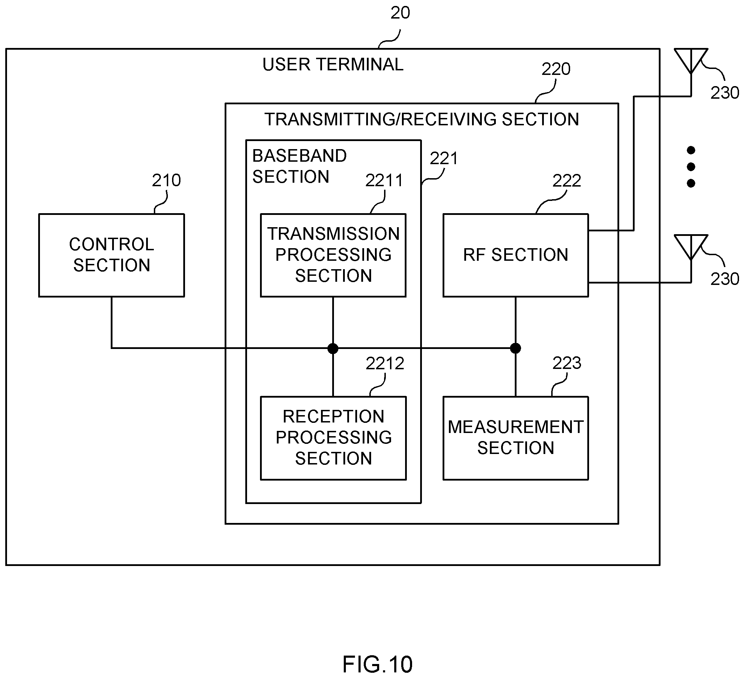

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating one or more candidate cells and information related to an execution condition for the candidate cell. The control section 210 may evaluate, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

Configuration of a separate execution condition may be supported for the each candidate cell. The control section 210 may perform control to perform synchronization with the one or more candidate cells before receiving the control information. After judging the specific candidate cell, the control section 210 may judge, based on presence or absence of valid timing advance corresponding to the specific candidate cell, whether to apply a random access procedure.

The control information may be a MAC CE (Medium Access Control Control Element) that supports configuration of a plurality of field sets corresponding to a plurality of respective candidate cells. A number of the candidate cells to be the target of the evaluation indicated by the MAC CE or a number of the field sets may be determined based on higher layer signaling and a capability of the terminal. When the MAC CE indicates a plurality of candidate cells or a plurality of field sets, the control section 210 may start a given timer after receiving the MAC CE to evaluate an execution condition for the candidate cell to be the target of the evaluation. When the MAC CE indicates one candidate cell or one field set, the control section 210 may judge, without evaluating an execution condition for the one candidate cell, that the one candidate cell is a specific candidate cell for which mobility or cell switch is performed.

After the specific candidate cell is judged, the transmitting/receiving section 220 may perform UL transmission to at least one of the specific candidate cell and a serving cell, the UL transmission being based or not based on a random access procedure. After the specific candidate cell is judged, the transmitting/receiving section 220 may transmit an RRC reconfiguration complete message to the specific cell. After the specific candidate cell is judged, the transmitting/receiving section 220 may transmit, to the specific cell, a MAC CE (Medium Access Control Control Element) indicating that the mobility or the cell switch is determined. After the specific candidate cell is judged, the transmitting/receiving section 220 may transmit, to the serving cell, a MAC CE including information related to the specific cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

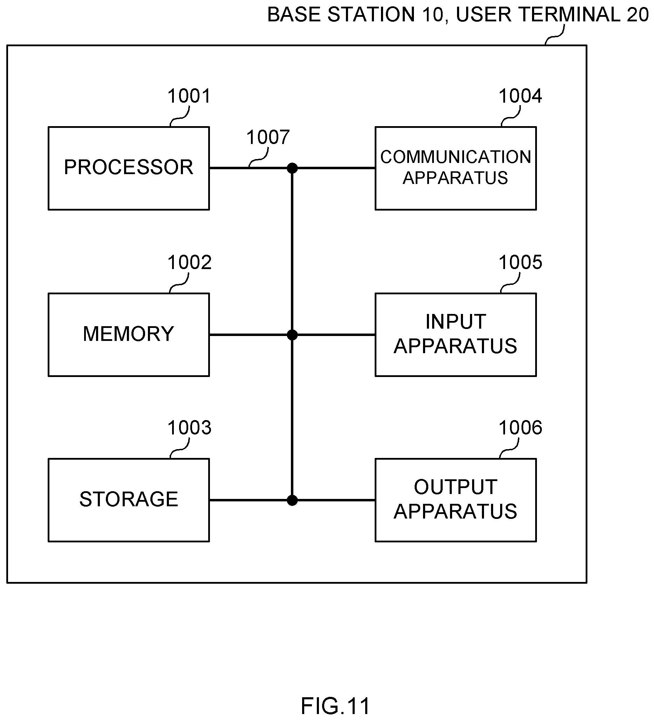

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

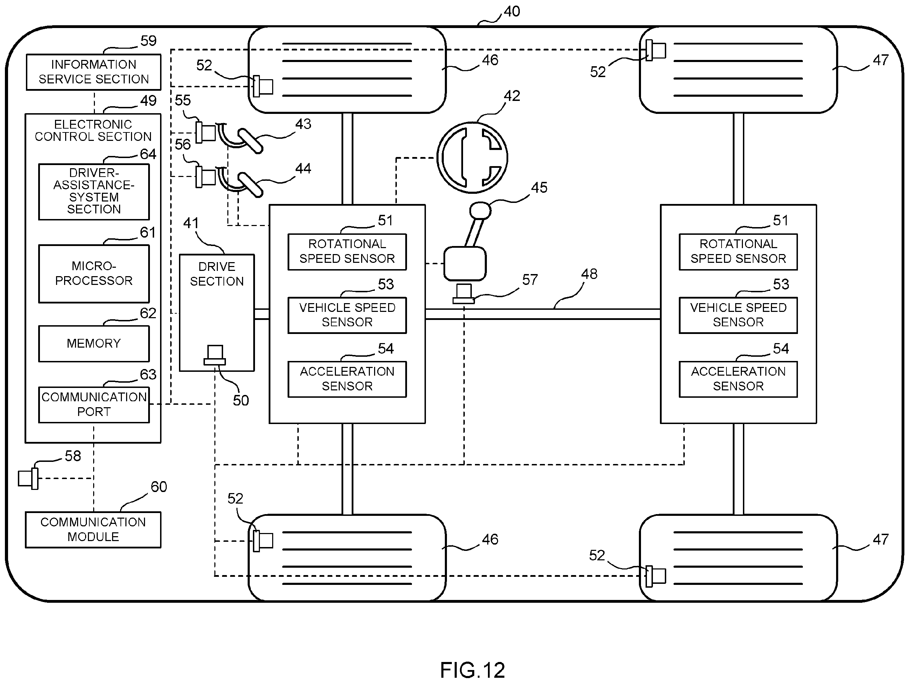

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information indicating one or more candidate cells and information related to an execution condition for the candidate cell; and
a control section that evaluates, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

2. The terminal according to claim 1, wherein
configuration of a separate execution condition is supported for the each candidate cell.

3. The terminal according to claim 1, wherein
the control section performs control to perform synchronization with the one or more candidate cells before receiving the control information.

4. The terminal according to claim 1, wherein
after judging the specific candidate cell, the control section judges, based on presence or absence of valid timing advance corresponding to the specific candidate cell, whether to apply a random access procedure.

5. A radio communication method for a terminal, the radio communication method comprising:
receiving information indicating one or more candidate cells and information related to an execution condition for the candidate cell; and
evaluating, based on control information indicating information related to a candidate cell to be a target of evaluation of an execution condition, among the one or more candidate cells, an execution condition for the candidate cell to be the target of the evaluation to judge a specific candidate cell for which mobility or cell switch is performed.

6. A base station comprising:
a transmitting section that transmits, to a terminal, information indicating one or more candidate cells and information related to an execution condition for the candidate cell; and
a control section that judges, based on a measurement report transmitted from the terminal, a candidate cell to be a target of evaluation of an execution condition and that indicates information related to the candidate cell to be the target of the evaluation.
